# EUROPEAN PATENT APPLICATION

(11) **EP 4 636 933 A1**
(43) Date of publication of application: **22.10.2025**
(21) Application number: 25167226.7
(22) Date of filing: 28.03.2025
(51) Int. Cl.: H01M 50/503, H01M 50/507, H01M 50/526

(54) **BATTERY MODULE**

(30) Priority: 29.03.2024 KR 20240043468
(71) Applicant: SK On Co., Ltd., Seoul 03161 (KR)
(72) Inventor: LEE, Gang U, 34124 Daejeon (KR); KIM, Jeong Won, 34124 Daejeon (KR); NA, Chae Won, 34124 Daejeon (KR); NOH, Yun Joo, 34124 Daejeon (KR); HAN, Kyu Hyun, 34124 Daejeon (KR); HWANG, Won Gab, 34124 Daejeon (KR)
(74) Representative: Stolmár & Partner Patentanwälte PartG mbB

(57) **Abstract**

The present disclosure relates to a battery module including: a plurality of battery cells; a busbar assembly disposed on one side of the plurality of battery cells and connected to the plurality of battery cells; and a protective member disposed on at least a portion of one side of the busbar assembly facing the plurality of battery cells.

## Description

### BACKGROUND OF THE INVENTION

### 1. Field

The present disclosure relates to a battery module. More specifically, the present disclosure relates to a battery module for delaying thermal propagation (TP) during thermal runaway of a battery cell.

### 2. Description of the Related Art

Battery cells can generate a large amount of heat during charging and discharging. When the internal heat cannot be quickly suppressed, flames or heat may spread to adjacent battery cells, causing significant damage. Therefore, one of the main tasks is to quickly suppress the heat generated inside the battery module and suppress the propagation of flames or heat.

### SUMMARY OF THE INVENTION

According to one aspect of the present disclosure, a battery module that delays the propagation of high-temperature gas (e.g., off-gas) or heat inside the battery module due to thermal runaway of the battery cell may be provided.

According to another aspect of the present disclosure, a battery module with an extended life by increasing heat resistance or fire resistance may be provided.

Meanwhile, the battery module according to the present disclosure may be widely applied in the field of green technology such as electric vehicles, battery charging stations, energy storage systems (ESS), and other battery-based photovoltaics and wind power. In addition, the battery module according to the present disclosure may be used for eco-friendly mobility, including electric vehicles and hybrid vehicles, to prevent climate change by restraining air pollution and greenhouse gas emissions.

In order to solve the above problems, a battery module according to the present disclosure may include a plurality of battery cells; a bus bar assembly disposed on one side of the plurality of battery cells and connected to the plurality of battery cells; and a protective member disposed on at least a portion of one side of the busbar assembly facing the plurality of battery cells.

In an embodiment, the battery module may further include a fire-resistant member disposed in an accommodation space formed by an electrode lead protruding from the plurality of battery cells, the plurality of battery cells, and the busbar assembly.

In an embodiment, the fire-resistant member may have a columnar shape.

In an embodiment, the fire-resistant member may include a plurality of granular materials.

In an embodiment, the busbar assembly may include a busbar electrically connected to the plurality of battery cells, and a busbar frame disposed between the busbar and the plurality of battery cells and supporting the busbar, wherein a thickness of the protective member may be smaller than a thickness of the busbar frame or the busbar.

In an embodiment, a melting point of the protective member may be greater than a melting point of the busbar frame.

In an embodiment, the busbar frame may include a partition wall protruding from the one side of the busbar assembly facing the plurality of battery cells toward the plurality of battery cells, and wherein the protective member may be disposed on one side of the busbar assembly opposite to the plurality of battery cells, between the partition wall.

In an embodiment, the protective member may include a plurality of protective units covering the one side of the busbar assembly opposite to the plurality of battery cells and spaced apart from each other with the partition wall interposed therebetween.

In an embodiment, the protective member may cover at least a portion of the partition wall.

In an embodiment, the protective member may include a bent portion bent along the partition wall.

In an embodiment, the battery module may further include a blocking member disposed in at least a portion of the plurality of battery cells, wherein the blocking member may be inserted between the partition wall.

In an embodiment, the protective member may be attached to the one side of the busbar assembly.

In an embodiment, the protective member may include a fire-resistant material.

In an embodiment, the protective member may be injected to the one side of the busbar assembly.

In an embodiment, the busbar assembly may include a busbar electrically connected to the plurality of battery cells, and a busbar frame disposed between the busbar and the plurality of battery cells and supporting the busbar, wherein the plurality of battery cells may be stacked in a first direction, wherein the busbar and the busbar frame may be combined in a second direction perpendicular to the first direction, and wherein a length of the protective member may be greater than a length of the busbar in a third direction perpendicular to the first direction and the second direction.

In an embodiment, the battery module may further include a module body accommodating the plurality of battery cells, the busbar assembly, and the protective member, and including an opening on one side; and a module cover combined to the module body to close the opening.

### BRIEF DESCRIPTION OF THE DRAWINGS

FIG. 1 is an exploded view illustrating a battery module according to an embodiment of the present disclosure.
FIG. 2 is a diagram illustrating a busbar frame and a protective member according to an embodiment of the present disclosure.
FIG. 3 is a cross-sectional view illustrating a battery module according to an embodiment of the present disclosure.
FIG. 4 is a cross-sectional view illustrating a battery module according to an embodiment of the present disclosure.
FIG. 5 is a diagram illustrating a busbar frame and a protective member according to another embodiment of the present disclosure.
FIG. 6 is a cross-sectional view illustrating a battery module according to another embodiment of the present disclosure.
FIG. 7 is a diagram illustrating a busbar frame and a protective member according to another embodiment of the present disclosure.
FIG. 8 is a cross-sectional view illustrating a battery module according to another embodiment of the present disclosure.
FIG. 9 is a cross-sectional view illustrating a battery module according to another embodiment of the present disclosure.

### DETAILED DESCRIPTION

Hereinafter, the present disclosure will be described in detail with reference to the accompanying drawings. This is, however, illustrative only and not intended to limit the disclosure to the specific embodiments illustratively described. In the present disclosure, a battery cell refers to a battery or a secondary battery capable of charging and discharging.

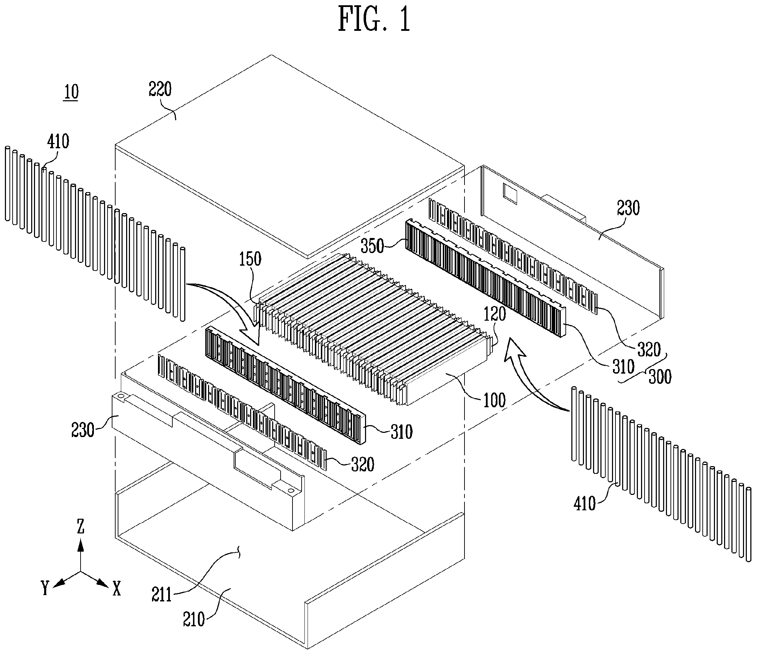

FIG. 1 is an exploded view illustrating a battery module 10 according to an embodiment of the present disclosure.

Referring to FIG. 1, the battery module 10 according to an embodiment of the present disclosure may include a plurality of battery cells 100, a module body 210, a module cover 220, an end plate 230, a busbar assembly 300, and a first fire-resistant member 410.

Referring to FIG. 1, the battery module 10 according to an embodiment of the present disclosure may include a plurality of battery cells 100, a module body 210, a module cover 220, an end plate 230, and a busbar assembly 300.

Each of the plurality of battery cells 100 may include an electrode assembly and an exterior material. The exterior material of the plurality of battery cells 100 may accommodate the electrode assembly and an electrolyte. For example, the exterior material may be implemented in various types, such as a pouch type, a square type, and a cylindrical type, depending on the shape.

The plurality of battery cells 100 may be various types of secondary batteries, such as lithium-ion batteries, vanadium-ion batteries, all-solid-state batteries, metal-air batteries, sodium-ion batteries, and aluminum-ion batteries.

The plurality of battery cells 100 may be stacked in a first direction (X direction). The plurality of battery cells 100 may be disposed at regular intervals in the first direction (X direction). The plurality of battery cells 100 may output or store electrical energy.

A blocking member 150 may be disposed in at least a portion of the space between the plurality of battery cells 100. The blocking member 150 may be disposed between the plurality of battery cells 100 in the first direction (X direction). At least a portion of one side of the blocking member 150 may be covered by the plurality of battery cells 100.

The blocking member 150 may protrude outward from the plurality of battery cells 100 in a third direction Z. For example, the blocking member 150 may protrude toward the module cover 220 more than the plurality of battery cells 100 in the third direction (Z direction). The blocking member 150 may minimize a passage through which heat or flame may propagate to adjacent battery cells 100 when one battery cell 100 is thermally runaway.

The blocking member 150 may protrude outward from the plurality of battery cells 100 in a second direction (Y direction). For example, the blocking member 150 may protrude toward the end plate 230 more than the plurality of battery cells 100 in the second direction (Y direction). In the first direction (X direction), an end of the blocking member 150 may be disposed between the electrode leads 120. In the first direction (X direction), the end of the blocking member 150 may be alternately disposed with the electrode lead 120.

The module body 210, the module cover 220, and the end plate 230 may be combined to each other. The module body 210, the module cover 220, and the end plate 230 may be combined to form an internal space. The module body 210, the module cover 220, and the end plate 230 may protect the plurality of battery cells 100 accommodated in the internal space from external impacts or foreign substances. Each of the module body 210, the module cover 220, and the end plate 230 may include one of a metal material or a polymer.

The module body 210, the module cover 220, and the end plate 230 may accommodate the plurality of battery cells 100 therein. The module body 210 and the module cover 220 may be connected to form a hexahedral shape with front and rear surfaces that are open. The module body 210, the module cover 220, and the end plate 230 may prevent damage to the plurality of battery cells 100 from external impact, heat, vibration, or pressure.

The module body 210 may include an opening 211 opened toward an upper surface in the third direction (Z direction). In an embodiment, the module body 210 may include the opening 211 opened in the second direction (Y direction). The plurality of battery cells 100 may be disposed on the module body 210 through the opening 211. The module body 210 may include a side body formed by extending an edge toward the upper surface to cover the plurality of battery cells 100. In an embodiment, the module body 210 may have a "U" shape.

The module body 210 may overlap at least a portion of the plurality of battery cells 100. For example, the module body 210 may overlap the portion of the plurality of battery cells 100 in the third direction (Z direction). The module body 210 may be disposed under the plurality of battery cells 100. The module body 210 may overlap a lower surface of the plurality of battery cells 100 in the third direction (Z direction). The module body 210 may support the plurality of battery cells 100.

The module body 210 may have a high thermal conductivity. For example, the module body 210 may include a heat transfer member between the plurality of battery cells 100. The heat transfer member may have adhesion and thermal conductivity that is equal to or greater than a reference value. For example, the heat transfer member may include a polymer material having thermal conductivity, such as an epoxy or urethane-based material.

The blocking member 150 and the heat transfer member may be separate members, but the blocking member 150 may simultaneously perform the functions of the heat transfer member. To this end, the blocking member 150 may include multiple layers.

The module cover 220 may be combined to the module body 210. The module cover 220 may be combined with the module body 210 to form an inner surface of the space in which the plurality of battery cells 100 are accommodated. The module cover 220 may be combined to the module body 210 to close the opening 211. The module cover 220 may overlap at least the portion of the plurality of battery cells 100 in the third direction (Z direction). For example, the module cover 220 may overlap an upper surface of the plurality of battery cells 100. The module cover 220 may cover at least a portion of the upper surface of the plurality of battery cells 100.

The module cover 220 may overlap the busbar assembly 300 in the third direction (Z direction). For example, the module cover 220 may cover an upper surface of the busbar assembly 300.

The end plate 230 may be connected to the module body 210 and the module cover 220 to form one side surface of the internal space in which the plurality of battery cells 100 are accommodated. The end plate 230 may be disposed on one side of the plurality of battery cells 100. For example, the end plate 230 may overlap a side surface of the plurality of battery cells 100 in the second direction (Y direction). The end plate 230 may cover the side surface of the plurality of battery cells 100 in the second direction (Y direction). The end plate 230 may be disposed with the plurality of battery cells 100 interposed therebetween in the second direction (Y direction). For example, one end plate 230 may be disposed in front of the plurality of battery cells 100, and the other end plate 230 may be disposed in rear of the plurality of the battery cells 100.

The end plate 230 may overlap at least a portion of the busbar assembly 300. For example, the end plate 230 may overlap one side of the busbar assembly 300 in the second direction (Y direction). The end plate 230 may cover the one side of the busbar assembly 300 in the second direction (Y direction).

The busbar assembly 300 may electrically connect at least the portion of the plurality of battery cells 100. The busbar assembly 300 may be connected to the plurality of battery cells 100.

The busbar assembly 300 may overlap the plurality of battery cells 100 in a protruding direction of the electrode lead 120. The busbar assembly 300 may be disposed on the one side of the plurality of battery cells 100. The busbar assembly 300 may be disposed outside the plurality of battery cells 100 in the second direction (Y direction). The busbar assembly 300 may extend in the first direction (X direction) in which the plurality of battery cells 100 are stacked.

The busbar assembly 300 may include a busbar frame 310 and a busbar 320. The busbar 320 may be connected to the busbar frame 310. The busbar frame 310 may be disposed between the busbar 320 and the plurality of battery cells 100. The busbar frame 310 may include a non-conductive material having rigidity. For example, the busbar frame 310 may include plastic. More specifically, the busbar frame 310 may include engineering plastic. A melting point of the busbar frame 310 may be lower than a melting point of a protective member 350.

**In** addition, each of the electrode leads 120 included in the plurality of battery cells 100 may penetrate the busbar frame 310. The busbar frame 310 may include a hole through which the electrode lead 120 passes. For example, the busbar frame 310 may include a slit. The electrode lead 120 may be inserted into the busbar 320 passing through the busbar frame 310.

The busbar 320 may include a plurality of busbars 320. The busbar 320 may be connected to the busbar frame 310 on a surface on which the busbar frame 310 does not oppose the plurality of battery cells 100. The electrode lead 120 may be inserted into the busbar 320 to electrically connect the plurality of battery cells 100 and the busbar 320. The busbar 320 may include a hole into which the electrode lead 120 is inserted. For example, the busbar 320 may include the slit.

The protective member 350 may be disposed on one side of the busbar frame 310. More specifically, the protective member 350 may cover at least a portion of the one side of the busbar frame 310 facing the plurality of battery cells 100. The protective member 350 may overlap the one side of the busbar frame 310 facing the plurality of battery cells 100. For example, the protective member 350 may be attached to the one side of the busbar frame 310 facing the plurality of battery cells 100 through an adhesive. For another example, the protective member 350 may be injected together with the busbar frame 310 to be disposed on the one side of the busbar frame 310 facing the plurality of battery cells 100.

The protective member 350 may include a fire-resistant material. For example, the protective member 350 may include a mica. The melting point of the protective member 350 may be greater than the melting point of the busbar frame 310. Therefore, when the temperature increases due to flame, heat, or the like generated in the battery cell 100, the shape of the busbar frame 310 covered with the protective member 350 may not be easily damaged.

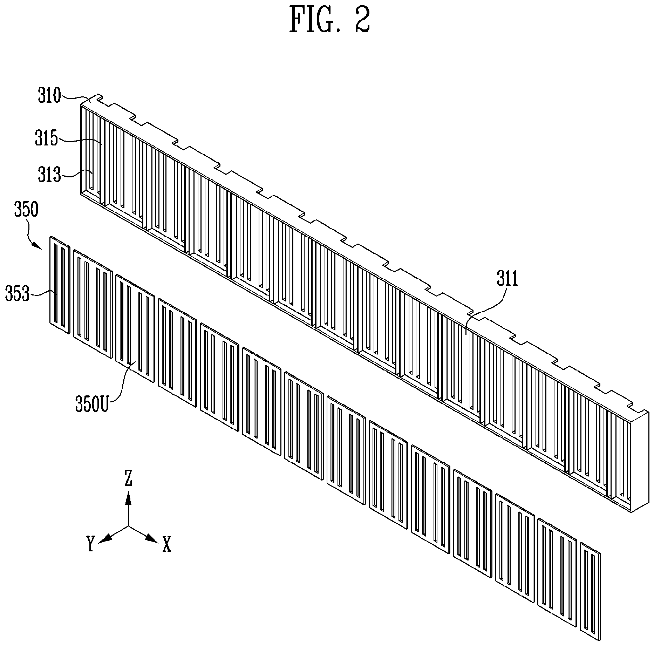

The protective member 350 will be described in detail below with reference to FIG. 2.

The first fire-resistant member 410 may be disposed between the plurality of battery cells 100 and the busbar assembly 300. The first fire-resistant member 410 may be located in a space formed by the electrode lead 120 of two adjacent battery cells 100 among the plurality of battery cells 100 and the busbar assembly 300. The first fire-resistant member 410 may occupy most of the volume of the space formed by the electrode lead 120 of the two adjacent battery cells 100 among the plurality of battery cells 100 and the busbar assembly 300. The first fire-resistant member 410 may have a columnar shape.

The first fire-resistant member 410 may include fire-resistant particles. For example, the first fire-resistant member 410 may have a columnar shape by bonding refractory particles by a binder. The refractory particles may be solid fills in the form of solid particles, powders, grains, pellets or beads. The material of the binder may be a polymer such as resin. The binder may include a heat-resistant or flame-retardant material. The binder may fill a plurality of voids formed between the contacts of the refractory particles and coat an outer side surface of the first fire-resistant member 410.

The size of the refractory particles may be micro-sized. The micro-sized refractory particles may be referred to as micro beads or micro granular bodies. A melting point of the refractory particles may preferably be greater than a predetermined allowable temperature of the battery cell 100.

The refractory particles may include a porous material. The porous material refers to a material that includes pores within a structure. The shape of the pores may be irregular and unstructured. More specifically, when the refractory particles include silica gel in the form of particles or powder, the porosity of the refractory particles may be 20 percent or more and 30 percent of less.

The first fire-resistant member 410 may include, for example, a fire-resistant (heat-resistant or flame-retardant) material. The fire-resistant material may be an inorganic compound. The inorganic compound may be any one compound selected from the group consisting of Alum (K2SO4·Al2(SO4)3·24H2O), Borax (Na2B4O7·10H2O), Lime Water (aqueous solution of Ca(OH)2), Quicklime (CaO), white emulsion made by mixing Milk of Lime Ca(OH)2 with water, Slaked Lime (Ca(OH)2), Washing Soda (Na2CO3·10H2O), Apatite (Ca5(PO4)30H), Baking Powder (a salt mixture of NaHCO3 and tartaric acid), Baking Soda (NAHCO3), Sodium Thiosulfate Pentahydrate (Na2S2O3·5H2O), Silica (or SiO2), Alumina (or Al2O3), Calcium Oxide (CaO), Calcium Sulfate (CaSO4), Calcium Chloride (CaCl2), Sodium Carbonate (Na2O3), Potassium Chloride (KCl), Magnesium Oxide (MgO), Zirconium Oxide (ZrO2), Chromic Oxide (Cr2O3), Aluminum Hydroxide (Al(OH)3), Antimony Trioxide (Sb2O3), Antimony Oxide (Sb2O5), Magnesium Hydroxide (Mg(OH)2) and a zinc borate compound, a phosphorus-based compound, a nitrogen-based guanidine compound, or a molybdenum compound, or a mixture thereof.

For example, the refractory particles may include silica (silicon dioxide). Considering the melting point (1713°C) of silica, the refractory particles may be able to minimize the propagation of heat or off-gas generated in the event of thermal runaway to other places. In addition, the refractory particles may remain unchanged in shape in the thermal runaway situation of the battery cell.

In another example, the refractory particles may include silica gel. The silica gel is a porous material in the form of a powder made by treating an aqueous solution of sodium silicate (Na2SiO3) with an acid. More specifically, the silica gel may be obtained by mixing sodium silicate and an aqueous inorganic acid solution (such as sulfuric acid) to form a silica hydrosol and curing the hydrosol with a hydrogel. Considering the above-described conventional method of silica gel, the main component (component that accounts for 50% or more) of the silica gel is silicon dioxide, and other components may further include aluminum oxide, iron (III) oxide (Fe2O3, iron (III) Oxide, or ferric Oxide), or sodium. Therefore, the melting point of the silica gel may be approximately 1600°C or greater.

Preferably, the silica gel may include at least 90 percent (%) silicon dioxide. In addition, since the silica gel is a porous material, the porosity of the refractory particles may be 20 percent (%) to 30 percent (%). In other words, the refractory particles may include silicon dioxide.

The refractory particles may refer to polymer materials that have a V-0 rating in the Underwriter's Laboratory (UL) 94V (Vertical Burning Test), which is the flame retardant standard for polymer materials.

The refractory particles may include a flame retardant polymer. The flame retardant materials include phosphorus-based, halogen-based, and inorganic flame retardants, and preferably, in the case of phosphorus-based flame retardant materials, a phosphate compound, a phosphonate compound, a phosphonate compound, a phosphine oxide compound, and a phosphagen compound, and metal salts thereof may be included. They may be used singly or in combination of two or more kinds.

In other specific embodiments, the phosphorus-based flame retardant may be, but is not limited to, diphenyl phosphate, diaryl phosphate, triphenyl phosphate, tricresyl phosphate, trixyrenyl phosphate, tri (2,6-dimethylphenyl)phosphate, tri (2,4,6-trimethylphenyl)phosphates, tri (2,4-ditertiarybutylphenyl)phosphate, bisphenol-A bis (diphenyl phosphate), resorcinol bis (diphenyl phosphate), resorcinol bis [bis (2,6- dimethyl phenyl)phosphate], resorcinol bis [bis (2,4-ditertiarybutylphenyl)phosphate], hydroquinone bis [bis (2,6-dimethylphenyl)phosphate]. They may be applied alone or in the form of a mixture of two or more.

A melting point of the first fire-resistant member 410 may be greater than an ignition point of the plurality of battery cells 100. The ignition point of the plurality of battery cells 100 may be a temperature when venting occurs in the battery cell 100. Alternatively, when the exterior material (or accommodating case) of the battery cell 100 is torn or opened in a thermal runaway situation, the ignition point may be a temperature of the electrolyte accommodated inside the battery cell 100.

For example, when one of the battery cells 100 starts to thermally runaway, the binder of the first fire-resistant member 410 starts to melt, but the refractory particles may remain in the form of a solid. When thermal runaway of the battery cell 100 occurs, the refractory particles may not burn or melt and the appearance of the refractory particles may remain without significant change.

The refractory particles may include a porous material. The porous material refers to a material that includes pores within a structure. The shape of the pores may be irregular and unstructured.

FIG. 2 is a diagram illustrating the busbar frame 310 and the protective member 350 according to an embodiment of the present disclosure.

Referring to FIG. 2, the busbar frame 310 may include a support portion 311, a first through hole 313, and a partition wall 315.

The support portion 311 may be disposed between the partition walls 315. The support part 311 may support the busbar 320 in FIG. 1. The busbar 320 in FIG. 1 may be disposed on one side of the support portion 311. More specifically, the busbar 320 in FIG. 1 may be disposed on the one side of the support portion 311 that does not face the plurality of battery cells 100 in FIG. 1. The support portion 311 may support the busbar 320 in FIG. 1 on the one side that does not face the plurality of battery cells 100.

The support portion 311 may overlap the protective member 350. One side of the support portion 311 facing the plurality of battery cells 100 in FIG. 1 may be covered by the protective member 350. That is, the busbar 320 in FIG. 1 and the protective member 350 may be disposed on opposite sides of the support portion 311.

The first through hole 313 may be disposed in the support portion 311. The electrode lead 120 in FIG. 1 protruding from the plurality of battery cells 100 in FIG. 1, may be inserted into the first through hole 313.

The partition wall 315 may be disposed between adjacent support portions 311. The partition wall 315 may separate the adjacent support portions 311. For example, the partition wall 315 may separate a space between the support portion 311 and the plurality of battery cells 100 in FIG. 1. The partition wall 315 may protrude from the support portion 311 toward the plurality of battery cells 100 in FIG. 1.

The protective member 350 may be disposed on the one side of the support portion 311 facing the plurality of battery cells 100 in FIG. 1. The protective member 350 may cover the one side of the support portion 311 facing the plurality of battery cells 100 in FIG. 1.

The protective member 350 may include a plurality of protective units 350U. The plurality of protective units 350U may be disposed on one side of the busbar frame 310 facing the plurality of battery cells 100 between the partition walls 315. The plurality of protective units 350U may correspond to the support portion 311 of the busbar frame 310. For example, the plurality of protective units 350U may cover each of the support portions 311 between the partition walls 315.

The plurality of protective units 350U may be disposed between the partition walls 315. The plurality of protective units 350U may be spaced apart from each other with the partition wall 315 interposed therebetween. The plurality of protective units 350U may be separated into separate components. The protective member 350 may include a second through hole 353 corresponding to the first through hole 313 of the busbar frame 310.

Although the protective member 350 is illustrated as having a rectangular shape in FIG. 2, the embodiment is not limited thereto. The protective member 350 may be modified into various shapes according to an embodiment.

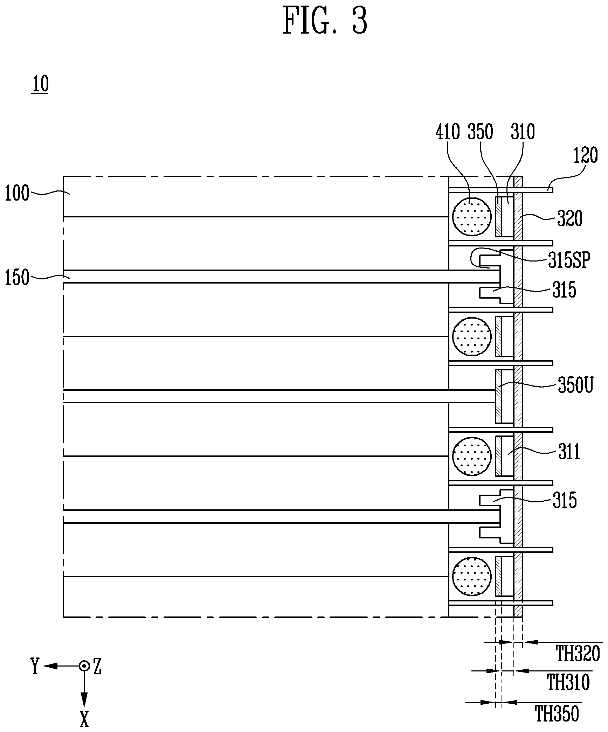

FIG. 3 is a cross-sectional view illustrating the battery module 10 according to an embodiment of the present disclosure.

Referring to FIG. 3, the first fire-resistant member 410 may be disposed between the busbar frame 310 and the plurality of battery cells 100. In addition, the first fire-resistant member 410 may be disposed between each electrode lead 120 of one battery cell 100 of the plurality of battery cells 100 and another battery cell 100 adjacent to the battery cell 100. That is, the first fire-resistant member 410 may be inserted into a space formed between the electrode leads 120 of the two adjacent battery cells 100.

When flame or heat is generated in one of the battery cells 100, the flame or heat may rapidly propagate to adjacent battery cells 100. The flame or heat may spread through the voids inside the battery module 10 in FIG. 1. To prevent this, the empty space inside the battery module 10 in FIG. 1 may be filled with a flame-retardant material. The first fire-resistant member 410 may fill the empty space inside the battery module 10 in FIG. 1 to prevent the propagation of the flames, heat, or the like.

The protective member 350 may be spaced apart from the busbar 320 with the busbar frame 310 interposed therebetween. More specifically, the protective member 350 may be disposed on the one side of the busbar frame 310 facing the plurality of battery cells 100, and the busbar 320 may be disposed on the other surface of the busbar frame 310 opposite to the plurality of battery cell 100.

The protective member 350 may be disposed on one side of the busbar frame 310 facing the first fire-resistant member 410. The protective member 350 may not cover an entire surface of the busbar frame 310. For example, the plurality of protective units 350U may extend along the support portion 311, but may not extend along the partition wall 315. The protective member 350 may not be disposed on the partition wall 315 of the busbar frame 310. That is, the protective member 350 may cover the one side of the support portion 311 facing the plurality of battery cells 100 and may not cover the partition wall 315. The protective member 350 may not be disposed in a recessed space 315SP between the partition wall 315 and the support portion 311.

A thickness TH350 of the protective member 350 may be smaller than a thickness TH310 of the busbar frame 310. More specifically, the thickness TH350 of the protective member 350 may refer to the thickness of the protective member 350 in the second direction (Y direction). The thickness TH310 of the busbar frame 310may refer to the thickness of the busbar frame 310 in the second direction (Y direction).

In addition, the thickness TH350 of the protective member 350 may be smaller than a thickness TH320 of the busbar 320. Similarly, the thickness TH320 of the busbar 320 may refer to the thickness of the busbar 320 in the second direction (Y direction).

In FIG. 3, the thickness TH350 of the protective member 350 is illustrated as smaller than the thickness TH310 of the busbar frame 310 or the thickness TH320 of the busbar 320, but the embodiment is not limited thereto. For example, the thickness TH350 of the protective member 350 may be greater than or equal to the thickness TH310 of the busbar frame 350 or the thickness TH320 busbar 320.

The blocking member 150 may be inserted between the partition walls 315. More specifically, the partition wall 315 may protrude from the support portion 311. The busbar frame 310 may include the recessed space 315SP between the partition wall 315 and the support portion 311. An end of the blocking member 150 may be inserted into the recessed space 315SP. The blocking member 150 and the partition wall 315 may separate a space disposed on one side from a space disposed on the other side with respect to the blocking member 150.

The first fire-resistant member 410 may not be disposed in the recessed space 315 SP into which the blocking member 150 is inserted. The first fire-resistant member 410 may not be inserted between the busbar frame 310 and the plurality of battery cells 100 where the blocking member 150 is disposed.

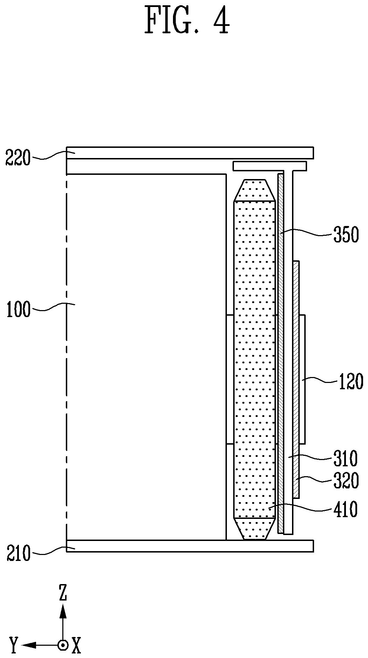

FIG. 4 is a cross-sectional view illustrating the battery module 10 according to an embodiment of the present disclosure.

Referring to FIG. 4, the protective member 350 may be disposed between the first fire-resistant member 410 and the busbar frame 310. The protective member 350 may cover the one side of the busbar frame 310 facing the first fire-resistant member 410.

In the third direction (Z direction), a length of the protective member 350 may be greater than a length of the busbar 320. However, the embodiment is not limited thereto. For example, in the third direction (Z direction), the length of the protective member 350 may be smaller than or equal to the length of the busbar 320.

Although FIG. 4 illustrates that the protective member 350 and the first fire-resistant member 410 are spaced apart from each other, the embodiment is not limited thereto. For example, the protective member 350 and the first fire-resistant member 410 may be in contact with each other.

When a flame or heat is generated in a specific battery cell 100, the first fire-resistant member 410 is disposed to prevent the flame or heat from propagating to other adjacent battery cells 100. On the other hand, when the busbar frame 310 having a relatively low melting point is melted, the position of the first fire-resistant member 410 disposed between the busbar frame 510 and the battery cell 100 is not fixed, so that the busbar frame 410 may be moved to the outside. Therefore, the first fire-resistant member 410 may not be able to suppress the propagation of flame or heat.

The melting point of the protective member 350 may be greater than the melting point of the busbar frame 310. Therefore, when a fire or heat occurs in the battery cell 100, damage to the structure of the busbar frame 310 whose surface is covered by the protective member 350 is suppressed. Therefore, since the protective member 350 suppresses damage to the busbar frame 310, the position of the first fire-resistant member 410 may be stably fixed. Accordingly, when a fire or heat occurs in the battery cell 100, the first fire-resistant member 410 may prevent the flame or heat from propagating to other adjacent battery cells 100.

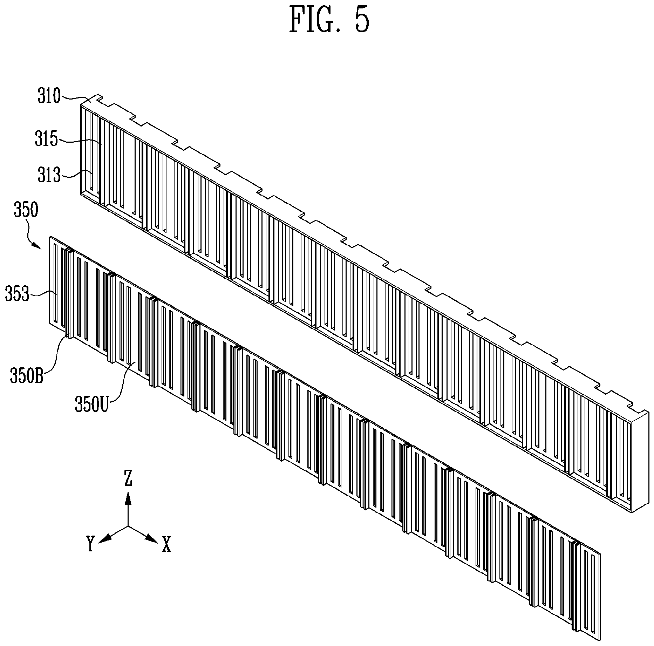

FIG. 5 is a diagram illustrating the busbar frame 310 and the protective member 350 according to another embodiment of the present disclosure. For convenience of description, the differences from those described with reference to FIG. 2 will be mainly explained.

Referring to FIG. 5, the protective member 350 may include a bent portion 350B. The bent portion 350B may be disposed between the plurality of protective units 350U. The bent portion 350B may connect the plurality of protective units 350U. The plurality of protective units 350U and the bent portion 350B are connected, so that the protective member 350 may be integrally formed.

The bent portion 350B may be bent toward the plurality of battery cells 100 in FIG. 1 from the plurality of protective units 350U. The bent portion 350B may correspond to the partition wall 315 of the busbar frame 310. The bent portion 350B may cover the partition wall 315 of the busbar frame 310.

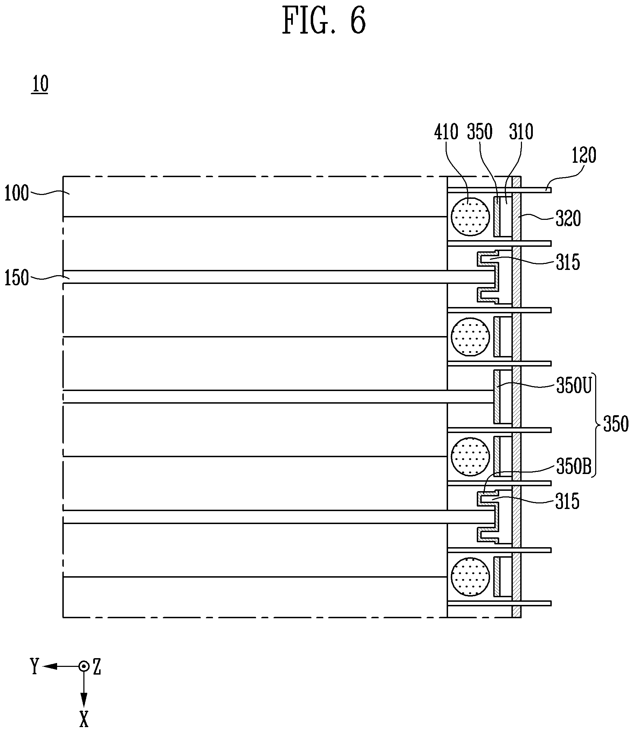

FIG. 6 is a cross-sectional view illustrating the battery module 10 according to another embodiment of the present disclosure. For convenience of description, the differences from those described with reference to FIG. 3 will be mainly explained.

Referring to FIG. 6, the bent portion 350B may extend along the partition wall 315. For example, the protective member 350 may cover an entire surface of the busbar frame 310 facing the plurality of battery cells 100. The plurality of protective units 350U may extend along the support portion 311, and the bent portion 350B may extend along the partition wall 315. The bent portion 350B may be bent along the partition wall 315. The protective member 350 may cover at least a portion of the partition wall 315.

The protective member 350 may be disposed in the recessed space 315SP in FIG. 3 between the partition wall 315 and the support portion 311. Therefore, the blocking member 150 may be disposed on the protective member 350 disposed in the recessed space 315SP in FIG. 3). For example, the blocking member 150 may be in contact with the protective member 350 in the recessed space 315SP in FIG. 3.

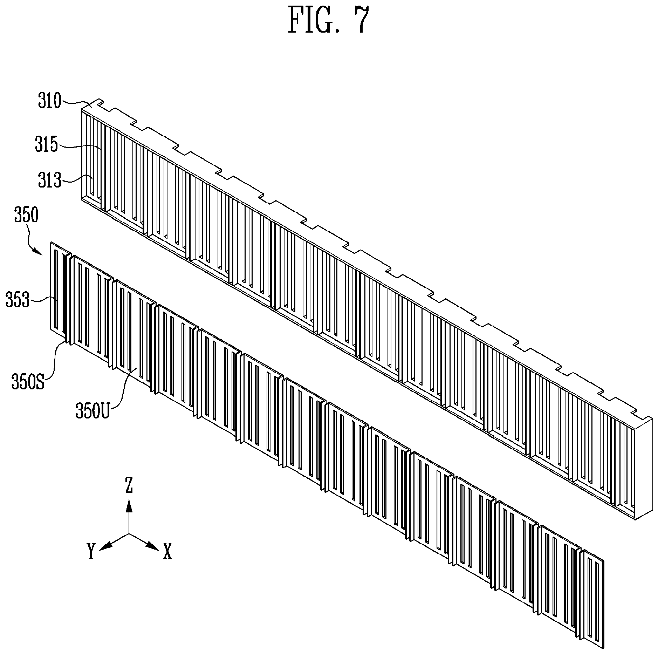

FIG. 7 is a diagram illustrating the busbar frame 310 and the protective member 350 according to another embodiment of the present disclosure. For convenience of description, the differences from those described with reference to FIG. 5 will be mainly explained.

Referring to FIG. 7, the protective member 350 may include a side wall portion 350S. The side wall portion 350S may be bent toward the plurality of battery cells 100 in FIG. 1 from the plurality of protective units 350U. For example, the side wall portion 350S may vertically meet the plurality of protective units 350U. Two adjacent side wall portions 350S may not be connected to each other. The side wall portion 350S may cover a side surface of the partition wall 315.

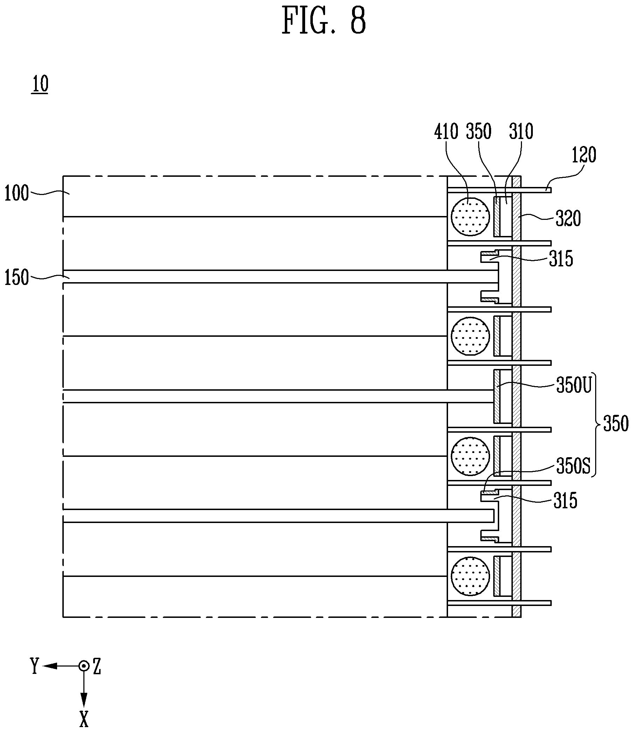

FIG. 8 is a cross-sectional view illustrating the battery module 10 according to another embodiment of the present disclosure. For convenience of description, the differences from those described with reference to FIG. 6 will be mainly explained.

Referring to FIG. 8, the side wall portion 350S may cover the side surface of the partition wall 315. The protective member 350 may cover at least the portion of the partition wall 315. The side wall portion 350S may cover the side surface of the partition wall 315 that does not extend along the entire partition wall 315 and does not face the blocking member 150. For example, the sidewall portion 350S may cover the side surface of the partition wall 315 facing the electrode lead 120. The side wall portion 350S may not be disposed between the blocking member 150 and the partition wall 315. The side wall portion 350S may not be disposed in the recessed space 315SP in FIG. 3. The side wall portions 350S may not be connected to each other in the recessed space 315SP in FIG. 3 between the partition walls 315.

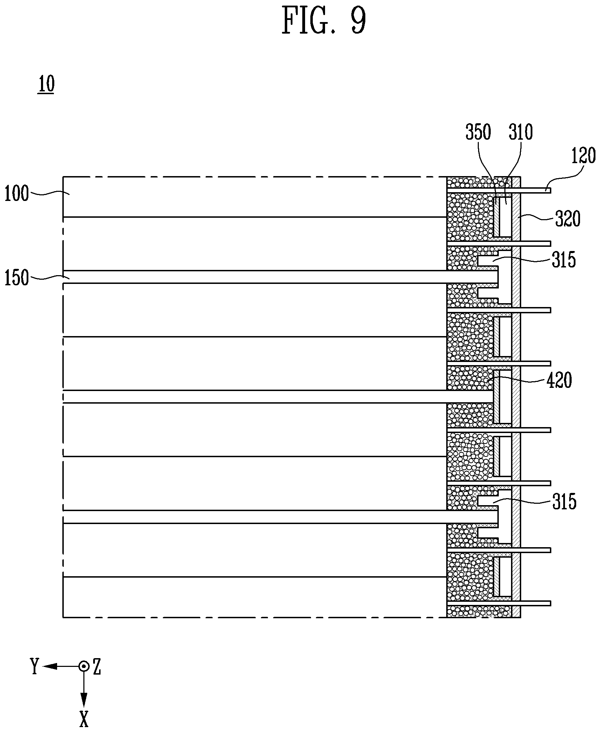

FIG. 9 is a cross-sectional view illustrating the battery module 10 according to another embodiment of the present disclosure. For convenience of description, the differences from those described with reference to FIG. 3 will be mainly explained.

Referring to FIG. 9, the battery module 10 may include the second fire-resistant member 420. The second fire-resistant member 420 may include a plurality of granular materials in the form of particles.

The second fire-resistant member 420 may include a solid filler. The solid filler may, for example, be provided in the form of particles, powders, grains, pellets or beads in solid form. The solid fill may include a fire-resistant (heat-resistant or flame-resistant) material. The fire-resistant material may be an inorganic compound. That is, the solid filler may include a refractory material formed of an inorganic compound. The second fire-resistant member 420 is different in shape from the first fire-resistant member 410 in FIG. 1 only and may include the same material.

Although FIG. 9 illustrates that the second fire-resistant members 420 are all spherical particles having the same size, the embodiment is not limited thereto. For example, the particles of each of the second fire-resistant members 420 may not be spherical and may have different sizes.

Some of the aspects of the present disclosure are as follows:
Aspect 1: A battery module 10 comprising: a plurality of battery cells 100; a bus bar assembly 300 disposed on one side of the plurality of battery cells 100 and connected to the plurality of battery cells 100; and a protective member 350 disposed on at least a portion of one side of the busbar assembly 300 facing the plurality of battery cells 100.
Aspect 2: The battery module 10 according to aspect 1, further comprising a fire-resistant member 410 disposed in an accommodation space formed by an electrode lead protruding from the plurality of battery cells 100, the plurality of battery cells 100, and the busbar assembly 300.
Aspect 3: The battery module 10 according to aspect 2, wherein the fire-resistant member 410 has a columnar shape.
Aspect 4: The battery module 10 according to aspect 2 or 3, wherein the fire-resistant member 410 includes a plurality of granular materials.
Aspect 5: The battery module 10 according to anyone of the preceding aspects, wherein the busbar assembly 300 includes: a busbar 320 electrically connected to the plurality of battery cells 100; and a busbar frame 310 disposed between the busbar 320 and the plurality of battery cells 100 and supporting the busbar 320, wherein a thickness of the protective member 350 is smaller than a thickness of the busbar frame 310 or the busbar 320.
Aspect 6: The battery module 10 according to aspect 5, wherein a melting point of the protective member 350 is greater than a melting point of the busbar frame 310.
Aspect 7: The battery module 10 according to aspect 5 or 6, wherein the busbar frame 310 includes a partition wall 315 protruding from the one side of the busbar assembly 300 facing the plurality of battery cells 100 toward the plurality of battery cells 100, and wherein the protective member 350 is disposed on one side of the busbar assembly 300 opposite to the plurality of battery cells 100, between the partition wall 315.
Aspect 8: The battery module 10 according to aspect 7, wherein the protective member 350 includes a plurality of protective units 350U covering the one side of the busbar assembly 300 opposite to the plurality of battery cells 100 and spaced apart from each other with the partition wall 315 interposed therebetween.
Aspect 9: The battery module 10 according to aspect 7 or 8, wherein the protective member 350 covers at least a portion of the partition wall 315.
Aspect 10: The battery module 10 according to aspect 9, wherein the protective member 350 includes a bent portion 350B bent along the partition wall 315.
Aspect 11: The battery module 10 according to any one of aspects 7 to 10, further comprising a blocking member 150 disposed in at least a portion of the plurality of battery cells 100, wherein the blocking member 150 is inserted between the partition wall 315.
Aspect 12: The battery module 10 according to aspect 1, wherein the protective member 350 is attached to the one side of the busbar assembly 300.
Aspect 13: The battery module 10 according to aspect 1, wherein the protective member 350 includes a fire-resistant material.
Aspect 14: The battery module 10 according to anyone of the preceding aspects, wherein the busbar assembly 300 includes: a busbar 320 electrically connected to the plurality of battery cells 100; and a busbar frame 310 disposed between the busbar 320 and the plurality of battery cells 100 and supporting the busbar 320, wherein the plurality of battery cells 100 are stacked in a first direction, wherein the busbar 320 and the busbar frame 310 are combined in a second direction perpendicular to the first direction, and wherein a length of the protective member 350 is greater than a length of the busbar 320 in a third direction perpendicular to the first direction and the second direction.
Aspect 15: The battery module 10 according to anyone of the preceding aspects, further comprising: a module body 210 accommodating the plurality of battery cells 100, the busbar assembly 300, and the protective member 350, and including an opening 211 on one side; and a module cover 220 combined to the module body 210 to close the opening 211.

The foregoing descriptions are merely examples applying the principles of the present disclosure, and other configurations may be further included without departing from the scope of the present invention.

## Claims

1. A battery module comprising:
a plurality of battery cells;
a busbar assembly disposed on one side of the plurality of battery cells and connected to the plurality of battery cells; and
a protective member disposed on at least a portion of one side of the busbar assembly facing the plurality of battery cells.

2. The battery module according to claim 1, further comprising a fire-resistant member disposed in an accommodation space formed by an electrode lead protruding from the plurality of battery cells, the plurality of battery cells, and the busbar assembly.

3. The battery module according to claim 2, wherein the fire-resistant member has a columnar shape.

4. The battery module according to claim 2 or 3, wherein the fire-resistant member includes a plurality of granular materials.

5. The battery module according to anyone of the preceding claims, wherein the busbar assembly includes:
a busbar electrically connected to the plurality of battery cells; and
a busbar frame disposed between the busbar and the plurality of battery cells and supporting the busbar,
wherein a thickness of the protective member is smaller than a thickness of the busbar frame or the busbar.

6. The battery module according to claim 5, wherein a melting point of the protective member is greater than a melting point of the busbar frame.

7. The battery module according to claim 5 or 6, wherein the busbar frame includes a partition wall protruding from the one side of the busbar assembly facing the plurality of battery cells toward the plurality of battery cells, and
wherein the protective member is disposed on one side of the busbar assembly opposite to the plurality of battery cells, between the partition wall.

8. The battery module according to claim 7, wherein the protective member includes a plurality of protective units covering the one side of the busbar assembly opposite to the plurality of battery cells and spaced apart from each other with the partition wall interposed therebetween.

9. The battery module according to claim 7 or 8, wherein the protective member covers at least a portion of the partition wall.

10. The battery module according to claim 9, wherein the protective member includes a bent portion bent along the partition wall.

11. The battery module according to any one of claims 7 to 10, further comprising a blocking member disposed in at least a portion of the plurality of battery cells,
wherein the blocking member is inserted between the partition wall.

12. The battery module according to claim 1, wherein the protective member is attached to the one side of the busbar assembly.

13. The battery module according to claim 1, wherein the protective member includes a fire-resistant material.

14. The battery module according to anyone of the preceding claims, wherein the busbar assembly includes:
a busbar electrically connected to the plurality of battery cells; and
a busbar frame disposed between the busbar and the plurality of battery cells and supporting the busbar,
wherein the plurality of battery cells are stacked in a first direction,
wherein the busbar and the busbar frame are combined in a second direction perpendicular to the first direction, and
wherein a length of the protective member is greater than a length of the busbar in a third direction perpendicular to the first direction and the second direction.

15. The battery module according to anyone of the preceding claims, further comprising:
a module body accommodating the plurality of battery cells, the busbar assembly, and the protective member, and including an opening on one side; and
a module cover combined to the module body to close the opening.
